# EUROPEAN PATENT APPLICATION

(11) **EP 4 800 777 A1**
(43) Date of publication of application: **02.09.2026**
(21) Application number: 24882087.0
(22) Date of filing: 25.09.2024
(51) Int. Cl.: H01M 4/62, C08F 214/22, C08K 3/04, C08K 5/33, C08L 27/16, H01M 4/13, H01M 4/139, H01M 4/505, H01M 4/525

(54) **ELECTRODE MIXTURE, ACTIVE MATERIAL MIXTURE, BINDER SOLUTION, PRODUCTION METHOD FOR ELECTRODE MIXTURE, PRODUCTION METHOD FOR ELECTRODE, ELECTRODE, AND SECONDARY BATTERY**

(30) Priority: 24.10.2023 JP 2023182455
(71) Applicant: Kureha Corporation, Chuo-ku Tokyo 103-8552 (JP)
(72) Inventor: ASHIDA, Kana, Tokyo 103-8552 (JP); OKADA, Kayoko, Tokyo 103-8552 (JP)
(74) Representative: Zimmermann & Partner Patentanwälte mbB
(86) International application number: PCT/JP2024/034147
(87) International publication number: WO 2025/088970

(57) **Abstract**

An electrode mixture containing an oxime, a vinylidene fluoride polymer having a structural unit derived from vinylidene fluoride in an amount of 50 mol% or more, an electrode active material, and carbon black having an average primary particle size of 30 nm or less.

## Description

### TECHNICAL FIELD

The present invention relates to an electrode mixture, an active material mixture for an electrode mixture, a binder solution, a method for producing an electrode mixture, a method for producing an electrode, an electrode, and a secondary battery.

### BACKGROUND ART

An electrode of a secondary battery including a lithium-ion secondary battery or the like includes a current collector and an electrode mixture layer formed on the current collector. The electrode mixture layer is prepared by applying, to a current collector, a slurry-like electrode mixture containing a binder and an electrode active material, and drying the applied electrode mixture. In the electrode mixture, a conductive additive such as carbon black may be blended to improve the electrical characteristics of the battery.

The viscosity of the electrode mixture increases over time after the preparation of the electrode mixture. When the viscosity is excessively increased, and for example, gelation has occurred, the applicability of the electrode mixture extremely deteriorates. Patent Document 1 describes that excessive thickening of an electrode mixture can be suppressed by blending an oxime in the electrode mixture.

### CITATION LIST

### PATENT DOCUMENT

Patent Document 1: WO 2022/044538

### SUMMARY OF INVENTION

### TECHNICAL PROBLEM

As described in Patent Document 1, the applicability of the electrode mixture can be improved by suppressing the excessive thickening of the electrode mixture. On the other hand, when an attempt is made to suppress the thickening of the electrode mixture, the adhesiveness of the prepared electrode mixture layer to the current collector may degrade.

The present invention has been made in view of the above issues, and an objective of the present invention is to provide an electrode mixture in which excessive thickening is less likely to occur over time and an adhesion strength of a prepared electrode mixture layer to a current collector is less likely to decrease, an active material mixture and a binder solution for preparing the electrode mixture, a method for producing the electrode mixture, a method for producing an electrode using the electrode mixture, an electrode produced from the electrode mixture, and a secondary battery having the electrode.

### SOLUTION TO PROBLEM

One embodiment according to the present invention for solving the above issues relates to the electrode mixtures of [1] to [10] shown below.
[1] An electrode mixture containing:
   an oxime;
   a vinylidene fluoride polymer having a structural unit derived from vinylidene fluoride in an amount of 50 mol% or more;
   an electrode active material; and
   carbon black having an average primary particle size of 30 nm or less.
[2] The electrode mixture according to [1], wherein the oxime is an oxime represented by Formula (1) below or an oxime represented by Formula (2) shown below: 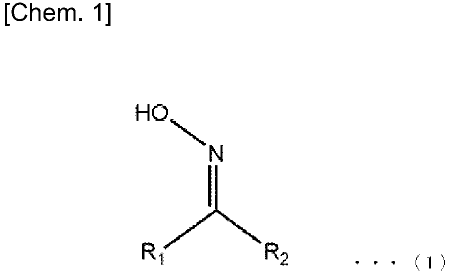 where
   R₁ and R₂ independently represent a functional group selected from the group consisting of a hydrogen atom, an aldehyde group, a nitrile group, an alkyl group having 1 or more and 10 or less carbon atoms, an alkenyl group having 2 or more and 10 or less carbon atoms, an alkynyl group having 2 or more and 10 or less carbon atoms, a cycloalkyl group having 3 or more and 10 or less carbon atoms, a cycloalkenyl group having 3 or more and 10 or less carbon atoms, an aryl group having 6 or more and 18 or less carbon atoms, an aralkyl group having 7 or more and 14 or less carbon atoms, and a heterocyclic group having 3 or more and 13 or less carbon atoms,
   some or all of hydrogen atoms of R₁ and R₂ may be substituted with a substituent selected from the group consisting of an alkyl group having 1 or more and 10 or less carbon atoms, an aryl group having 6 or more and 18 or less carbon atoms, a hydroxy group, and an amino group,
   when the functional group or the substituent has the alkyl group, the alkyl group may be straight-chain, branched, or may have an ester bond, and
   R₁ and R₂ may be bound to each other to form a ring; 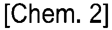 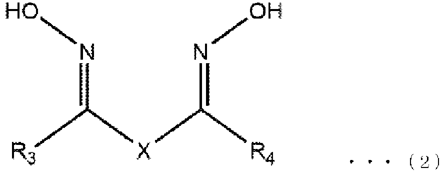
   where
   R₃ and R₄ independently represent a functional group selected from the group consisting of a hydrogen atom, an aldehyde group, a nitrile group, an alkyl group having 1 or more and 10 or less carbon atoms, an alkenyl group having 2 or more and 10 or less carbon atoms, an alkynyl group having 2 or more and 10 or less carbon atoms, a cycloalkyl group having 3 or more and 10 or less carbon atoms, a cycloalkenyl group having 3 or more and 10 or less carbon atoms, an aryl group having 6 or more and 18 or less carbon atoms, an aralkyl group having 7 or more and 14 or less carbon atoms, and a heterocyclic group having 3 or more and 13 or less carbon atoms,
   some or all of hydrogen atoms of R₃ and R₄ as functional groups may be substituted with a substituent selected from the group consisting of an alkyl group having 1 or more and 10 or less carbon atoms, an aryl group having 6 or more and 18 or less carbon atoms, a hydroxy group, and an amino group, when the functional group or the substituent has the alkyl group, the alkyl group may be straight-chain, branched, or may have an ester bond,
   R₃ and R₄ may be bound to each other to form a ring,
   X represents a single bond or an alkylene group having 1 or more and 5 or less carbon atoms, and
   the alkylene group may be straight-chain or branched.
[3] The electrode mixture according to [2], wherein
   the oxime represented by Formula (1) is an oxime in which R₁ and R₂ independently represent a hydrogen atom or an alkyl group having 1 or more and 5 or less carbon atoms, the alkyl group may be straight-chain or branched, and R₁ and R₂ may be bound to each other to form a ring, and
   the oxime represented by Formula (2) is an oxime in which R₃ and R₄ independently represent a hydrogen atom or an alkyl group having 1 or more and 5 or less carbon atoms, the alkyl group may be straight-chain or branched, R₃ and R₄ may be bonded to each other to form a ring, X represents a single bond or an alkylene group having 1 or more and 5 or less carbon atoms, and the alkylene group may be straight-chain or branched.
[4] The electrode mixture according to [2] or [3], wherein the oxime is the oxime represented by Formula (2).
[5] The electrode mixture according to any one of [1] to [4], wherein a content of the oxime is an amount such that an amount of hydroxyimino groups of the oxime with respect to 1 g of the vinylidene fluoride polymer is 0.02 mmol/g or more and 0.80 mmol/g or less.
[6] The electrode mixture according to any one of [1] to [5], wherein the vinylidene fluoride polymer is a homopolymer of vinylidene fluoride.
[7] The electrode mixture according to any one of [1] to [6], wherein the vinylidene fluoride polymer is a copolymer of a monomer copolymerizable with vinylidene fluoride and vinylidene fluoride.
[8] The electrode mixture according to any one of [1] to [7], wherein the vinylidene fluoride polymer is a vinylidene fluoride polymer containing a structural unit derived from a compound represented by Formula (3) shown below: 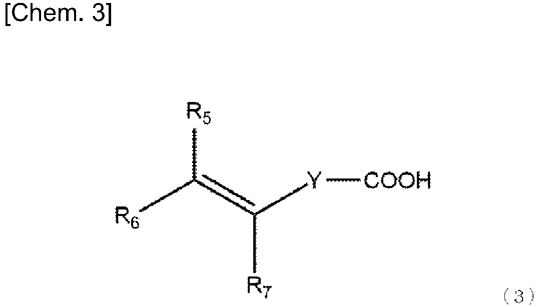 where
   R₅ represents a hydrogen atom, an alkyl group having 1 or more and 5 or less carbon atoms, or a carboxy group substituted with an alkyl group having 1 or more and 5 or less carbon atoms,
   R₆ and R₇ independently represent a hydrogen atom or an alkyl group having 1 or more and 5 or less carbon atoms,
   when R₅, R₆, or R₇ represents the alkyl group, the alkyl group may be straight-chain or branched, and
   Y represents a single bond or an atomic group having a main chain with the number of atoms of 1 or more and 20 or less and a molecular weight of 500 or less.
[9] The electrode mixture according to any one of [1] to [8], wherein the vinylidene fluoride polymer is a vinylidene fluoride polymer containing a structural unit derived from a (meth)acrylate-based monomer having no COOH group at a terminal.
[10] The electrode mixture according to any one of [1] to [9], wherein the electrode active material is a lithium metal oxide represented by Formula (4) shown below, and is a compound having a pH of extracted water of 10.5 or more when extracted with water at 25°C by an extraction method provided in JIS K 5101-16-2 (2004):

   LiNiₓCo_{y}M_{z}O₂ ... (4)

   where M is Mn or Al, and 0 < x < 1, 0 < y < 1, 0 < z < 1, and x + y + z = 1 are satisfied.

Another embodiment according to the present invention for solving the above issues relates to the active material mixture of [11] below.
An active material mixture containing:
an oxime;
an electrode active material; and
carbon black having an average primary particle size of 30 nm or less.

Another embodiment according to the present invention for solving the above issues relates to the binder solution of [12] shown below.
A binder solution for an electrode mixture, the binder solution containing:
an oxime; and
a vinylidene fluoride polymer having a structural unit derived from vinylidene fluoride in an amount of 50 mol% or more,
wherein the electrode mixture further contains an electrode active material and carbon black having an average primary particle size of 30 nm or less.

Another embodiment according to the present invention for solving the above issues relates to a method for producing an electrode mixture of [13] shown below.
A method for producing an electrode mixture,
the method including mixing an oxime, a vinylidene fluoride polymer having a structural unit derived from vinylidene fluoride in an amount of 50 mol% or more, an electrode active material, and carbon black having an average primary particle size of 30 nm or less to form a slurry.

Another embodiment according to the present invention for solving the above issues relates to the method for producing an electrode of [14] shown below.
A method for producing an electrode, the method including:
applying, to a current collector, the electrode mixture described in any one of [1] to [10]; and
drying the applied electrode mixture.

Another embodiment according to the present invention for solving the above issues relates to the electrodes of [15] to [17] shown below.
An electrode produced by the method for producing an electrode described in [14].
The electrode according to [15], wherein, when measured by a 90° peel test, an electrode mixture layer produced from the electrode mixture has a peel strength from the current collector of 80% or more with respect to a peel strength of an electrode mixture layer from a current collector for an electrode produced under same production conditions from an electrode mixture having same compositions except that no oxime is contained.
An electrode including:
   a current collector; and
   an electrode mixture layer,
   wherein
   the electrode mixture layer contains
   an oxime,
   a vinylidene fluoride polymer having a structural unit derived from vinylidene fluoride in an amount of 50 mol% or more,
   an electrode active material, and
   carbon black having an average primary particle size of 30 nm or less.

Another embodiment according to the present invention for solving the above issues relates to the secondary battery of [18] shown below.
A secondary battery including the electrode described in [17].

### ADVANTAGEOUS EFFECTS OF INVENTION

According to the present invention, there is provided an electrode mixture in which excessive thickening is less likely to occur over time and an adhesion strength of a prepared electrode mixture layer to a current collector is less likely to decrease, an active material mixture and a binder solution for preparing the electrode mixture, a method for producing the electrode mixture, a method for producing an electrode using the electrode mixture, an electrode produced from the electrode mixture, and a secondary battery having the electrode.

### DESCRIPTION OF EMBODIMENTS

### Electrode Mixture

One embodiment according to the present invention relates to an electrode mixture for producing an electrode by applying the electrode mixture to a current collector.

The electrode mixture contains an oxime, a vinylidene fluoride polymer having a structural unit derived from vinylidene fluoride in an amount of 50 mol% or more, an electrode active material, and carbon black having an average primary particle size of 30 nm or less.

### Oxime

The oxime reduces the initial viscosity of the electrode mixture and also suppresses the increase in viscosity over time.

The oxime is a compound in which the oxygen atom of the carbonyl group of an aldehyde or ketone is replaced with a hydroxyimino group (=NOH). The oxime may be an oxime derived from an aldehyde (RCH=NOH) or an oxime derived from a ketone (R'RC =NOH).

The type of the oxime is not particularly limited. Examples of the oxime include acetone oxime (acetoxime), 2-butanone oxime (methylethyl ketone oxime), methyl isopropyl ketone oxime, methyl tertiary-butyl ketone oxime, di-tertiary-butyl ketone oxime, 2-pentanone oxime, 3-pentanone oxime, 1-cyclohexyl-1-propanone oxime, formaldehyde oxime, acetaldoxime (acetaldehyde oxime), butylaldoxime (benzaldehyde oxime) benzaldoxime (benzaldehyde oxime), acetophenone oxime, benzophenone oxime, 4-hydroxyacetophenone oxime, cyclopropanone oxime, cyclobutanone oxime, cyclopentanone oxime, cyclohexanone oxime, cycloheptanone oxime, cyclooctanone oxime, cyclonanonanone oxime, cyclodecanone oxime, cyclododecanone oxime, benzoquinone dioxime, benzoquinone monoxime, 2,3-butanedione monoxime, acetamide oxime, 3-hydroxy-3-methyl-2-butanone oxime, α-benzoine oxime, 1,3-dihydroxyacetone oxime, 2-isonitrosopropiophenone, dimethylglyoxime, methylethyl glyoxime, diethylglyoxime, diphenylglyoxime, benzophenone dioxime, piperidone oxime, 2,4-pentanedione dioxime, 2-diethyl ether oxime, ethyl acetohydroxymate, and ethyl cyanoglyoxylate oxyme.

The oxime may be a polymer containing a hydroxyimino group (hereinafter, also simply referred to as "oxime polymer") or an oligomer containing a hydroxyimino group (hereinafter, also simply referred to as "oxime oligomer").

The oxime polymer and the oxime oligomer can be synthesized by polymerizing a monomer or oligomer containing a hydroxyimino group or reacting a polymer or oligomer having a ketone group in a skeleton with a hydroxyamine. Examples of the polymer having a ketone group in the skeleton include poly(methyl vinyl ketone), polyketone (PK), polyether ketone (PEK), polyether ether ketone (PEEK), polyether ketone ketone (PEKK), polyether ether ketone ketone (PEEKK), and polyether ketone ether ketone ketone (PEKEKK). Specific examples of the oxime polymer and the oxime oligomer include poly(methyl vinyl oxime).

One of these oximes may be used, or a plurality of these oximes may be used in combination.

These oximes can be oximes represented by Formula (1) shown below or oximes represented by Formula (2) shown below.

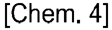

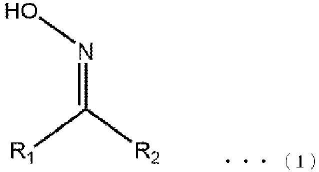

In Formula (1), R₁ and R₂ independently represent a functional group of a hydrogen atom, an aldehyde group, a nitrile group, an alkyl group having 1 or more and 10 or less carbon atoms, an alkenyl group having 2 or more and 10 or less carbon atoms, an alkynyl group having 2 or more and 10 or less carbon atoms, a cycloalkyl group having 3 or more and 10 or less carbon atoms, a cycloalkenyl group having 3 or more and 10 or less carbon atoms, an aryl group having 6 or more and 18 or less carbon atoms, an aralkyl group having 7 or more and 14 or less carbon atoms, or a heterocyclic group having 3 or more and 13 or less carbon atoms. Each alkyl group described above may be straight-chain, branched, or may have an ester bond. R₁ and R₂ may be bound to each other to form a ring.

The number of carbon atoms of the alkyl group is preferably 1 or more and 10 or less, more preferably 1 or more and 5 or less, even more preferably 1 or more and 2 or less. The number of carbon atoms of the alkenyl group is preferably 2 or more and 10 or less, more preferably 2 or more and 6 or less, even more preferably 2 or more and 4 or less. The number of carbon atoms of the alkynyl group is preferably 2 or more and 10 or less, more preferably 2 or more and 6 or less, even more preferably 2 or more and 4 or less. The number of carbon atoms of the cycloalkyl group is preferably 3 or more and 10 or less, more preferably 3 or more and 7 or less, even more preferably 5 or more and 7 or less. The number of carbon atoms of the aryl group is preferably 6 or more and 18 or less, more preferably 6 or more and 10 or less, even more preferably 6 or more and 8 or less. The number of carbon atoms of the aralkyl group is preferably 7 or more and 14 or less, more preferably 7 or more and 11 or less, even more preferably 7 or more and 9 or less. The number of carbon atoms of the heterocyclic group is preferably 3 or more and 13 or less, more preferably 3 or more and 10 or less, even more preferably 3 or more and 8 or less.

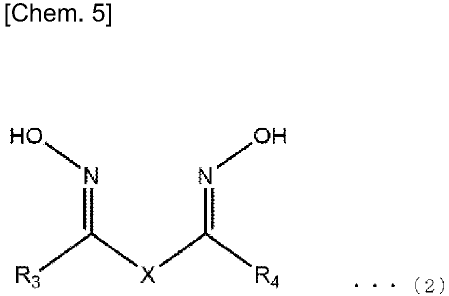

In Formula (2), R₃ and R₄ independently represent a functional group of a hydrogen atom, an aldehyde group, a nitrile group, an alkyl group having 1 or more and 10 or less carbon atoms, an alkenyl group having 2 or more and 10 or less carbon atoms, an alkynyl group having 2 or more and 10 or less carbon atoms, a cycloalkyl group having 3 or more and 10 or less carbon atoms, a cycloalkenyl group having 3 or more and 10 or less carbon atoms, an aryl group having 6 or more and 18 or less carbon atoms, an aralkyl group having 7 or more and 14 or less carbon atoms, or a heterocyclic group having 3 or more and 13 or less carbon atoms. Each alkyl group described above may be straight-chain, branched, or may have an ester bond. R₃ and R₄ may be bound to each other to form a ring.

The number of carbon atoms of the alkyl group is preferably 1 or more and 10 or less, more preferably 1 or more and 5 or less, even more preferably 1 or more and 2 or less. The number of carbon atoms of the alkenyl group is preferably 2 or more and 10 or less, more preferably 2 or more and 6 or less, even more preferably 2 or more and 4 or less. The number of carbon atoms of the alkynyl group is preferably 2 or more and 10 or less, more preferably 2 or more and 6 or less, even more preferably 2 or more and 4 or less. The number of carbon atoms of the cycloalkyl group is preferably 3 or more and 10 or less, more preferably 3 or more and 7 or less, even more preferably 5 or more and 7 or less. The number of carbon atoms of the aryl group is preferably 6 or more and 18 or less, more preferably 6 or more and 10 or less, even more preferably 6 or more and 8 or less. The number of carbon atoms of the aralkyl group is preferably 7 or more and 14 or less, more preferably 7 or more and 11 or less, even more preferably 7 or more and 9 or less. The number of carbon atoms of the heterocyclic group is preferably 3 or more and 13 or less, more preferably 3 or more and 10 or less, even more preferably 3 or more and 8 or less.

X represents a single bond or an alkylene group having 1 or more and 5 or less carbon atoms. The alkylene group may be straight-chain or branched.

From the viewpoint of more effectively suppressing the decrease in the adhesion strength of the electrode mixture layer to the current collector, the oxime represented by Formula (1) is preferably an oxime in which R₁ and R₂ independently represent a hydrogen atom or an alkyl group having 1 or more and 5 or less carbon atoms. The alkyl group may be straight-chain or branched. R₁ and R₂ may be bound to each other to form a ring. When the alkyl group constituting R₁ or R₂ is straight-chain or branched, one or both of the alkyl groups preferably have 1 or more and 3 or less carbon atoms, more preferably 1 or more and 2 or less carbon atoms, still more preferably 1 carbon atom.

From the viewpoint of more effectively suppressing the decrease in the adhesion strength of the electrode mixture layer to the current collector or more enhancing the adhesion strength, the total number of carbon atoms of R₁ and R₂ is preferably 1 or more and 3 or less, more preferably 1 or more and 2 or less, even more preferably 1.

From the viewpoint of more effectively suppressing the decrease in the adhesion strength of the electrode mixture layer to the current collector or further enhancing the adhesion strength, R₁ and R₂ are preferably bound to each other to form a ring. The number of carbon atoms constituting the ring is preferably 3 or more and 12 or less, more preferably 4 or more and 8 or less.

Examples of the oxime represented by Formula (1) in which R₁ or R₂ represents a hydrogen atom or an alkyl group having 1 or more and 5 or less carbon atoms include acetoxime, 2-butanone oxime, methyl isopropyl ketone oxime, methyl-tertiary butyl ketone oxime, di-tertiary-butyl ketone oxime, 2-pentanone oxime, formaldehyde oxime, acetaldoxime, butyl aldoxime, cyclopropanone oxime, cyclobutanone oxime, cyclopentanone oxime, cyclohexanone oxime, cycloheptanone oxime, cyclooctanone oxime, cyclonanone oxime, and cyclodecanone oxime.

From the viewpoint of more effectively suppressing the decrease in the adhesion strength of the electrode mixture layer to the current collector, the oxime represented by Formula (2) is preferably an oxime in which R₃ and R₄ independently represent a hydrogen atom or an alkyl group having 1 or more and 5 or less carbon atoms. The alkyl group may be straight-chain or branched. R₃ and R₄ may be bound to each other to form a ring. When the alkyl group constituting R₃ or R₄ is straight-chain or branched, one or both of the alkyl groups preferably have 1 or more and 3 or less carbon atoms, more preferably 1 or more and 2 or less carbon atoms, still more preferably 1 carbon atom.

From the viewpoint of more effectively suppressing the decrease in adhesion strength of the electrode mixture layer to the current collector or more enhancing the adhesion strength, X is preferably an alkylene group having 1 or more and 5 or less carbon atoms, more preferably an alkylene group having 1 or more and 3 or less carbon atoms, even more preferably an alkylene group having 1 carbon atom.

Examples of the oxime represented by Formula (2) in which R₃ and R₄ each represent a hydrogen atom or an alkyl group having 1 or more and 5 or less carbon atoms include dimethylglyoxime, methylethylglyoxime, diethylglyoxime, and 2,4-pentanedione dioxime.

From the viewpoint of more effectively suppressing the decrease in adhesion strength of the electrode mixture layer to the current collector or more enhancing the adhesion strength, it is preferable that the oxime is an oxime represented by Formula (1) in which R₁ and R₂ independently represent a hydrogen atom or an alkyl group having 1 or more and 5 or less carbon atoms, or an oxime represented by Formula (2) in which R₃ and R₄ independently represent a hydrogen atom or an alkyl group having 1 or more and 5 or less carbon atoms. Among these, an oxime represented by Formula (2) in which R₃ and R₄ independently represent a hydrogen atom or an alkyl group having 1 or more and 5 or less carbon atoms is more preferable.

In the oxime represented by Formula (1) and the oxime represented by Formula (2), some or all of the hydrogen atoms of the alkyl group may be substituted with an alkyl group having 1 or more and 10 or less carbon atoms, an aryl group having 6 or more and 18 or less carbon atoms, a hydroxy group, or an amino group.

The content of the oxime in the electrode mixture is preferably an amount such that the amount of the hydroxyimino group of the oxime is 0.005 mmol or more and 5.00 mmol or less, more preferably 0.01 mmol or more and 3.00 mmol or less, still more preferably 0.02 mmol or more and 0.80 mmol or less, particularly preferably 0.20 mmol or more and 0.80 mmol or less, with respect to 1 g of the vinylidene fluoride polymer. As the amount of the hydroxyimino group is further increased, the initial viscosity of the electrode mixture can be further reduced, and the increase in viscosity over time can be more effectively suppressed. On the other hand, by setting the amount of the hydroxyimino group to 3.00 mmol or less or 0.80 mmol or less with respect to 1 g of the vinylidene fluoride polymer, or to 0.20 mmol or more with respect to 1 g of the vinylidene fluoride polymer, the adhesion strength of the electrode mixture layer to the current collector can be further enhanced.

The content of the oxime in the electrode mixture is such that the amount of the hydroxyimino group of the oxime is preferably 0.0075 mmol or more and 7.50 mmol or less, more preferably 0.015 mmol or more and 4.50 mmol or less, still more preferably 0.03 mmol or more and 1.20 mmol or less, particularly preferably 0.30 mmol or more and 1.20 mmol or less, with respect to 100 g of the active material. As the amount of the hydroxyimino group is further increased, the initial viscosity of the electrode mixture can be further reduced, and the increase in viscosity over time can be more effectively suppressed. On the other hand, by setting the amount of the hydroxyimino group to 4.50 mmol or less or 1.20 mmol or less with respect to 100 g of the active material, or by setting the amount of the hydroxyimino group to 0.30 mmol or more with respect to 100 g of the active material, the adhesion strength of the electrode mixture layer to the current collector can be further enhanced.

The presence or absence and the amount of the oxime in the electrode mixture can be analyzed by mass spectrometry (P&T-GCMS, solvent extraction-GCMS, or the like) or nuclear magnetic resonance (¹H-NMR, ¹³C-NMR, or the like).

### Vinylidene Fluoride Polymer

The vinylidene fluoride polymer acts as a binding agent for binding the electrode active material to the current collector.

The vinylidene fluoride polymer is a polymer containing a structural unit derived from vinylidene fluoride as a main structural component. Specifically, the vinylidene fluoride polymer contains the structural unit derived from vinylidene fluoride in an amount of 50 mol% or more, preferably 80 mol% or more, more preferably 90 mol% or more. The upper limit of the amount of the structural unit derived from vinylidene fluoride is not particularly limited, but it may be 100 mol%.

The vinylidene fluoride polymer may be a homopolymer of vinylidene fluoride or a copolymer of a monomer copolymerizable with vinylidene fluoride and vinylidene fluoride.

When the vinylidene fluoride polymer is a copolymer, the vinylidene fluoride polymer may be a copolymer with any known monomer copolymerizable with vinylidene fluoride.

When the vinylidene fluoride polymer is a copolymer, the vinylidene fluoride polymer preferably contains a structural unit derived from a compound represented by Formula (3) shown below.

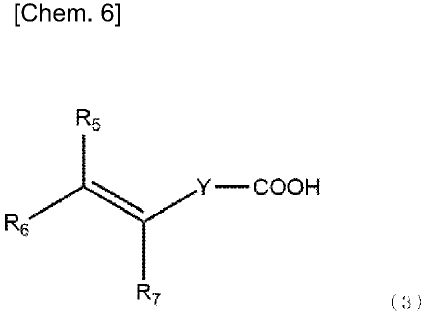

In Formula (3), R₅ represents a hydrogen atom, an alkyl group having 1 or more and 5 or less carbon atoms, or a carboxy group substituted with an alkyl group having 1 or more and 5 or less carbon atoms. R₆ and R₇ each independently represent a hydrogen atom or an alkyl group having 1 or more and 5 or less carbon atoms. When R₅, R₆, or R₇ represents the alkyl group, the alkyl group may be straight-chain or branched. From the viewpoint of facilitating the polymerization reaction, R₅ and R₆ are preferably substituents having small steric hindrance. Specifically, R₅ and R₆ are independently preferably hydrogen or an alkyl group having 1 or more and 3 or less carbon atoms, more preferably hydrogen or a methyl group.

Y in Formula (3) is a single bond or an atomic group having a main chain with the number of atoms of 1 or more and 20 or less and a molecular weight of 500 or less. The atomic group more preferably has a molecular weight of 200 or less. The lower limit of the molecular weight of the atomic group is not particularly limited, but is usually 15. As the molecular weight of the atomic group is reduced, the electrode mixture can be made more difficult to become gel. In the present specification, the "number of atoms of the main chain" means the number of atoms of the skeleton portion of the chain connecting the carboxy group described on the right side of Y in Formula (3) and the group described on the left side of Y (R₅R₆C=CR₇-) with the smallest number of atoms. Y may be straight-chain or branched containing a functional group as a side chain. When a side chain is present, Y may have only one side chain or a plurality of side chains. When Y is a single bond, the compound represented by Formula (3) has a structure in which a carboxy group is directly bound to a carbon atom bound to R₇.

Examples of the compound represented by Formula (3) include acrylic acid (AA), methacrylic acid, 2-carboxyethyl acrylate (CEA), 2-carboxyethyl methacrylate, maleic acid monomethyl ester, acryloyloxyethyl succinate (AES), acryloyloxypropyl succinic acid (APS), methacryloyloxyethyl succinic acid, and methacryloyloxypropyl succinic acid. One of these compounds may be used, a plurality of these compounds may be used in combination.

When the vinylidene fluoride polymer is a copolymer, the vinylidene fluoride polymer may have a structural unit derived from an additional compound other than the compound represented by Formula (3). Examples of the additional compound include perfluoroalkyl vinyl ethers such as vinyl fluoride, trifluoroethylene, tetrafluoroethylene, chlorotrifluoroethylene, hexafluoropropylene (HFP), and perfluoromethyl vinyl ether; (meth)acrylatebased monomers having no COOH group at the terminal, such as glycidyl (meth)acrylate and methyl (meth)acrylate; and esterified products of unsaturated dibasic acids such as maleic acid, fumaric acid, and citraconic acid, and unsaturated dibasic acids such as maleic acid monomethyl ester, maleic acid monoethyl ester, citraconic acid monomethyl ester, and citraconic acid monoethyl ester. One of these compounds may be used, a plurality of these compounds may be used in combination. When the vinylidene fluoride polymer is a copolymer, the vinylidene fluoride polymer may be a copolymer with only the compound represented by Formula (3), a copolymer with only the additional compound, or a copolymer with both the compound represented by Formula (3) and the additional compound.

When the vinylidene fluoride polymer is a copolymer with the compound represented by Formula (3), the modification amount (proportion of the number of moles of the structural unit derived from the compound represented by Formula (3) to the number of moles of all the structural units contained in the vinylidene fluoride polymer) is preferably 0.01 mol% or more and 10 mol% or less, more preferably 0.1 mol% or more and 5 mol% or less, even more preferably 0.2 mol% or more and 1 mol% or less. The amount of the structural unit derived from vinylidene fluoride in the vinylidene fluoride polymer (proportion of the number of moles of the structural unit derived from vinylidene fluoride to the number of moles of all the structural units contained in the vinylidene fluoride polymer) is preferably 90 mol% or more and 99.99 mol% or less, more preferably 95 mol% or more and 99.90 mol% or less, still more preferably 99.00 mol% or more and 99.80 mol% or less, particularly preferably 99.50 mol% or more and 99.80 mol% or less. When the modification amount is in the above ranges, the amount of change in the viscosity of the electrode mixture after storage with respect to the viscosity of the electrode mixture immediately after preparation can be reduced to further stabilize the viscosity of the electrode mixture.

The modification amount of the vinylidene fluoride polymer and the amount of the structural unit derived from vinylidene fluoride can be determined by ¹H NMR spectrum or ¹⁹F NMR spectrum of the copolymer, or neutralization titration.

A commercially available vinylidene fluoride polymer may be used. Examples of commercially available vinylidene fluoride polymers include KF#7300, KF#9100, KF#9700, KF#7500, and KF#9400 available from KUREHA CORPORATION.

The inherent viscosity (ηi) of the vinylidene fluoride polymer is not particularly limited, but is preferably 0.5 dL/g or more and 5.0 dL/g or less, more preferably 1.0 dL/g or more and 4.5 dL/g or less, even more preferably 1.5 dL/g or more and 4.0 dL/g or less. When the inherent viscosity is in the above ranges, thickness unevenness during application is less likely to occur, and the electrode can be more easily prepared.

The inherent viscosity (ηi) is calculated by the following method. Dissolve 80 mg of the vinylidene fluoride polymer in 20 mL of N,N-dimethylformamide to prepare a polymer solution. Measure the viscosity η of the prepared polymer solution in a thermostatic bath at 30°C using an Ubbelohde viscometer. The inherent viscosity (ηᵢ) is then calculated from the following equation:${η}_{i} = \left(1/C\right) \cdot ln \left(η/{η}_{0}\right)$

where η₀ is the viscosity of the solvent N,N-dimethylformamide, and C is the concentration of the vinylidene fluoride polymer in the prepared polymer solution (0.4 g/dL).

The method for polymerizing the vinylidene fluoride polymer is not particularly limited, and a known polymerization method can be used. Examples of the polymerization method include suspension polymerization, emulsion polymerization, and solution polymerization. Among these, aqueous suspension polymerization or emulsion polymerization is preferable, and aqueous suspension polymerization is more preferable because posttreatment is easy.

The content of the vinylidene fluoride polymer in the electrode mixture can be 0.2 mass% or more and 20 mass% or less, preferably 0.2 mass% or more and 10 mass% or less, more preferably 0.2 mass% or more and 4 mass% or less, with respect to the total amount of the solid content in the electrode mixture.

### Electrode Active Material

The electrode active material takes in or releases ions such as lithium ions. The electrode active material thus enables charging and discharging of the secondary battery.

The electrode active material may be a positive electrode active material or a negative electrode active material.

The positive electrode active material is not particularly limited, but is preferably a lithium metal oxide.

Examples of the lithium metal oxide include LiMnO₂, LiMn₂O₄, LiCoO₂, LiNiO₂, LiNiₓCo_{1 - x}O₂ (0 < x < 1), LiNiₓCo_{y}Mn_{1 - x - y}O₂ (0 < x < 1, 0 < y < 1), LiNiₓCo_{y}Al_{1 - x - y}O₂ (0 < x < 1, 0 < y < 1), and LiMₐPO₄ (where Mₐ is one or more elements selected from Co, Ni, Mn, Fe, Mg, Nb, Ti, Al, and Zr).

From the viewpoint of increasing the capacity density to increase the capacity of the secondary battery, the positive electrode active material is preferably a lithium metal compound containing Ni. In addition, from the viewpoint of suppressing the change in crystal structure in the charging and discharging process and stabilizing the cycle characteristics, the positive electrode active material is more preferably a lithium metal compound containing Ni and Co.

From the viewpoint of increasing the charging potential of the secondary battery and further enhancing the cycle characteristics, the positive electrode compound is preferably a lithium metal oxide (ternary lithium metal oxide) represented by Formula (4) shown below.

LiNiₓCo_{y}M_{z}O₂ ... (4)

In Formula (4), M is Mn or Al, and 0 < x < 1, 0 < y < 1, 0 < z < 1, and x + y + z = 1 are satisfied.

Examples of the ternary lithium metal oxide include Li_{1.00}Ni_{0.5}Co_{0.2}Mn_{0.3}O₂ (NCM523), Li_{1.00}Ni_{0.6}Co_{0.2}Mn_{0.2}O₂ (NCM622), Li_{1.00}Ni_{0.8}Co_{0.1}Mn_{0.1}O₂ (NCM811), and Li_{1.00}Ni_{0.8}Co_{0.15}Al_{0.05}O₂ (NCA811). These ternary lithium metal oxides are preferably compounds in which the pH of extracted water is 10.5 or more when the compounds are extracted with water at normal temperature (25°C) by an extraction method provided in JIS K 5101-16-2 (2004). Such a ternary lithium metal oxide is likely to dehydrofluoride the vinylidene fluoride polymer, thereby easily causing thickening of the electrode mixture. However, the electrode mixture according to the present embodiment can suppress an increase in viscosity because of the oxime.

Specifically, the pH of the extracted water is a value obtained by adding the electrode active material to ultrapure water in an amount 50 times the weight of the electrode active material, stirring the mixture with a magnetic stirrer at a rotational speed of 600 rpm for 10 minutes, and measuring the pH of the extracted water with a pH meter MODEL: F-21 available from HORIBA, Ltd.

The electrode mixture containing the positive electrode active material with which the pH of the extracted water is 10.5 or more contains a large amount of base, and thus, vinylidene fluoride is likely to deteriorate, which is likely to cause thickening. Thus, it is usually necessary to remove the base by washing the positive electrode active material with water to suppress thickening of the electrode mixture slurry and gelation because of the thickening. On the other hand, in the electrode mixture according to the present embodiment, thickening and gelation of the electrode mixture hardly occur even when a positive electrode active material containing a large amount of such a base is used. Thus, in the electrode mixture according to the present embodiment, the positive electrode active material does not need to be washed with water at the time of production.

The negative electrode active material is not particularly limited, and known materials such as a carbon material, a metal/alloy material, and a metal oxide can be used. Among these, a carbon material is preferable from the viewpoint of further increasing the energy density of the secondary battery. Examples of the carbon material include artificial graphite, natural graphite, non-graphitizable carbon, and graphitizable carbon.

One of these electrode active materials may be used, or a plurality of these electrode active materials may be used in combination.

The content of the vinylidene fluoride and the electrode active material in the electrode mixture is such that the amount of the vinylidene fluoride is preferably 0.2 parts by mass or more and 15 parts by mass or less, more preferably 0.5 parts by mass or more and 10 parts by mass or less, with respect to 100 parts by mass of the electrode active material.

The content of the electrode active material in the electrode mixture is preferably 40 mass% or more and 99.9 mass% or less with respect to the total amount of the solid content in the electrode mixture. When the amount of the electrode active material is in this range, for example, a sufficient charge/discharge capacity is obtained, and good battery performance tends to be obtained.

### Carbon Black

Carbon black can be used as a so-called conductive additive that improves the conductivity of the electrode because of its conductive properties.

The carbon black is not particularly limited, and may be any of furnace black, Ketjen black, channel black, acetylene black, thermal black, and the like. Among these, acetylene black is preferable because it is easy to reduce metal components as impurities.

The carbon black may be subjected to oxidation or graphitization. The oxidized carbon black may have oxygen-containing polar functional groups such as a phenol group, a quinone group, a carboxy group, and a carbonyl group on the surface.

Carbon black is particles having an average primary particle size of 30 nm or less. The use of carbon black having such a small particle size in combination with an oxime makes it possible to more effectively suppress the decrease in the adhesion strength of the electrode mixture layer to the current collector or enhance the adhesion strength. From the above viewpoint, the average primary particle size of the carbon black is preferably 26 nm or less, more preferably 24 nm or less. The lower limit value of the average primary particle size of carbon black is not particularly limited, but it may be 5 nm or more.

The average primary particle size of carbon black is a value obtained by averaging particle sizes measured based on a photograph taken with a transmission electron microscope or the like. Specifically, 5 images at 100000 magnifications were photographed using a transmission electron microscope JEM-2000FX (available from JEOL Ltd.), the particle sizes of 200 or more primary particles randomly extracted were determined by image analysis, and the number average thereof was calculated to measure the particle size. The primary particle size is an equivalent circular diameter of the primary particle.

The carbon black may be secondary particles in which primary particles are connected in a chain or tuft shape. The specific surface area of the secondary particles measured by the BET method is preferably 20 m²/g or more and 1500 m²/g or less, more preferably 40 m²/g or more and 1500 m²/g or less, still more preferably 100 m²/g or more and 1000 m²/g or less, particularly preferably 100 m²/g or more and 500 m²/g or less. The larger the specific surface area of the carbon black, the more effectively the decrease in the adhesion strength of the electrode mixture layer to the current collector can be suppressed, or the adhesion strength can be further enhanced.

The content of carbon black in the electrode mixture is preferably 0.1 mass% or 15 mass% or less, more preferably 0.1 mass% or more and 7 mass% or less, even more preferably 0.1 mass% or more and 5 mass% or less, with respect to the total amount of the solid content in the electrode mixture.

### Non-Aqueous Solvent

The electrode mixture is preferably a slurry containing a non-aqueous solvent.

Examples of the non-aqueous solvent include N-methylpyrrolidone, N,N-dimethylformamide, N,N-dimethylacetamide, dimethyl sulfoxide, hexamethylphosphoramide, dioxane, tetrahydrofuran, tetramethylurea, triethyl phosphate, trimethyl phosphate, acetone, ethyl acetate, n-butyl acetate, n-butanol, dipropylene glycol monomethyl ether, propylene glycol monomethyl ether acetate, and cyclohexanone. Among these, N-methylpyrrolidone is preferable. One of these non-aqueous solvents may be used, or a plurality of these non-aqueous solvents may be used in combination.

The content of the non-aqueous solvent in the electrode mixture is not particularly limited, but for example, is preferably 20 parts by mass or more and 150 parts by mass or less with respect to 100 parts by mass of the electrode active material.

### Additional Substances

The electrode mixture may contain a binding agent other than the vinylidene fluoride polymer, a conductive additive other than carbon black, a pigment dispersant, a dispersion stabilizer, an adhesion auxiliary agent, a thickener, various coupling agents, and the like.

Examples of the conductive additive other than carbon black include carbonaceous materials such as carbon nanotubes, graphite fine powder, and graphite fibers, metal fine powder such as nickel and aluminum, and metal fibers.

Examples of the pigment dispersant include polyvinylpyrrolidone.

The content of these additional substances in the electrode mixture is preferably 15 mass% or less with respect to the total amount of the solid content in the electrode mixture.

### Electrode Mixture

The electrode mixture can be produced by mixing the above-described components to form a slurry.

The method for adding each component at the time of mixing is not particularly limited. The vinylidene fluoride polymer, the electrode active material, the carbon black, the oxime, and the non-aqueous solvent may be separately added to a mixing container, or a plurality of components thereof may be mixed in advance, and the resulting preliminary mixture may be added to the mixing container.

For example, the vinylidene fluoride polymer may previously be formed as a preliminary mixture in a liquid form (solution or dispersion) as a preliminary mixture containing the vinylidene fluoride polymer and the non-aqueous solvent. The vinylidene fluoride polymer may be formed into a powdery preliminary mixture produced by powder mixing with the electrode active material or carbon black in advance, or may be formed into a preliminary mixture in a liquid form (dispersion) to which the non-aqueous solvent is further added. To these liquid components, an oxime may be further added and mixed in advance.

The electrode active material may be formed into an active material mixture (dispersion) which is a preliminary mixture in a liquid form as a preliminary mixture containing the electrode active material and the non-aqueous solvent in advance. The electrode active material may be mixed with carbon black in advance to form an active material mixture as a preliminary mixture. The electrode active material and the carbon black may be formed into an active material mixture which is a powdery preliminary mixture produced by mixing powders, or may be formed into an active material mixture which is a preliminary mixture in a liquid form (dispersion) to which a non-aqueous solvent is further added. To the active material mixture which is a preliminary mixture in a liquid form, an oxime may be further added and mixed in advance.

The carbon black may be formed into a preliminary mixture in a liquid form (dispersion) as a preliminary mixture containing the carbon black and the non-aqueous solvent in advance. To the preliminary mixture in a liquid form, an oxime may be further added and mixed in advance.

The order of putting these components into the mixing container is not particularly limited.

The slurry preparation method is not particularly limited, and any known method can be used.

The resulting electrode mixture contains a vinylidene fluoride polymer, an electrode active material, carbon black having an average primary particle size of 30 nm or less, an oxime, and a non-aqueous solvent. The electrode mixture preferably has a viscosity immediately after preparation of 1000 mPa·s or more and 30000 mPa·s or less, more preferably 1000 mPa·s or more and 20000 mPa·s or less. The above electrode mixture preferably has a viscosity of 1000 mPa·s or more and 50000 mPa·s or less, more preferably 1000 mPa·s or more and 20000 mPa·s or less after storage under a nitrogen atmosphere at 40°C for 7 days after preparation. The viscosity immediately after preparation and the viscosity after storage can be adjusted by the addition amount of the oxime or the like.

### Electrode

The electrode mixture can be applied on a current collector and dried to prepare an electrode mixture layer included in an electrode.

The current collector is a substrate of the electrode, and also serves as a terminal for extracting electricity. The current collector can be made of metal such as iron, stainless steel, steel, copper, aluminum, nickel, and titanium. The shape of the current collector can be a foil shape, a net shape, or the like. For example, in a case of preparing a positive electrode, the current collector is preferably an aluminum foil. The thickness of the current collector is preferably 5 µm or more and 100 µm or less, more preferably 5 µm or more and 20 µm or less.

The electrode mixture can be applied to the current collector by a known method such as a bar coater, a die coater, or a comma coater. The drying can be performed at a temperature of, for example, 50°C or more and 170°C or less, and is preferably performed at a temperature of 50°C or more and 170°C or less. The formation of the electrode mixture layer by applying the electrode mixture to the current collector and drying the electrode mixture on the current collector may be performed on both surfaces of the current collector, or may be performed on only one surface of the current collector. After applying and drying, the formed electrode mixture layer may be pressed to increase the density.

The thickness of the electrode mixture layer can be, for example, 20 µm or more and 600 µm or less, and is preferably 20 µm or more and 350 µm or less. The basis weight of the electrode mixture layer can be, for example, 20 g/m² or more and 700 g/m² or less, and can be 20 g/m² or more and 500 g/m² or less.

The resulting electrode mixture has a current collector and an electrode mixture layer formed on the current collector. The electrode mixture layer contains a vinylidene fluoride polymer, an electrode active material, and carbon black having an average primary particle size of 30 nm or less. The oxime may be completely volatilized when dried, or the oxime may remain in the electrode. The residual amount of the oxime is not particularly limited, but can be more than 0 µg/m² (or the detection limit or more) and 500 µg/m² or less.

The formed electrode can be a positive electrode when the electrode active material is a positive electrode active material, and can be a negative electrode when the electrode active material is a negative electrode active material.

### Other Embodiments

The aforementioned embodiments are exemplary embodiment of the present invention, and it goes without saying that the present invention may include embodiments other than the aforementioned embodiments within the scope of its core technical concept.

### EXAMPLES

The present invention will be described in detail based on Examples, but the present invention is not limited to these Examples.

### 1. Preparation of Vinylidene Fluoride Polymer

### 1-1. Preparation of VDF/APS Copolymer

In an autoclave with a volume of 2 liters, 1096 g of ion-exchanged water, 0.2 g of METOLOSE 90SH-100 (available from Shin-Etsu Chemical Co., Ltd.), 2.2 g of a 50 wt.% diisopropyl peroxydicarbonate-HCFC 225cb solution, 426 g of vinylidene fluoride, and an initial addition amount of 0.2 g of acryloyloxy propyl succinic acid (APS) were placed. The temperature was raised to 26°C over 1 hour and then maintained at 26°C, and a 6 wt.% aqueous APS solution was gradually added at a rate of 0.5 g/min. The resulting polymer slurry was dehydrated and dried, and a vinylidene fluoride copolymer (VDF/APS copolymer) containing a polar group was produced. APS was added in a total amount of 4.0 g including the initially added amount.

### 1-2. Preparation of VDF/AA Copolymer

In an autoclave with a volume of 2 liters, 524 g of ion-exchanged water, 0.4 g of METOLOSE 90SH-100 (available from Shin-Etsu Chemical Co., Ltd.), 4 g of a 50 wt.% perbutyl perpivalate-HCFC 225cb solution, 396 g of vinylidene fluoride, and an initial addition amount of 0.2 g of acrylic acid (AA) were placed and heated to 50°C. A 1 wt.% aqueous AA solution was continuously supplied to a reactor under the conditions of maintaining a constant pressure during polymerization. The resulting polymer slurry was dehydrated and dried, and a vinylidene fluoride copolymer (VDF/AA) was produced. AA was added in a total mass of 3.96 g including the initially addition amount.

### 2. Preparation of Electrode Mixture

### 2-1. Preparation of Electrode Mixture 1

NCA811 was used as the electrode active material. Carbon black (DENKA BLACK Li-435 available from Denka Company Limited, average primary particle size: 23 nm) was added to NCA811, and powder mixing was performed.

The VDF/APS copolymer prepared in Preparation Example 1 and pentanedione dioxime were dissolved in N-methyl-2-pyrrolidone (NMP) to prepare a binder solution. At this time, the addition amount of pentanedione dioxime was adjusted so as to contain 6 wt.% of a vinylidene fluoride polymer and 0.22 mmol of pentanedione dioxime with respect to 1 g of the vinylidene fluoride polymer. At this time, the amount of the hydroxyimino group contained in pentanedione dioxime with respect to 1 g of the vinylidene fluoride polymer was 0.44 mmol.

NCA811, carbon black, and the binder solution were kneaded to prepare an electrode mixture 1. Specifically, the binder solution was added to carbon black such that the solid content concentration was 11.3 wt.%, and primary kneading was performed at 2000 rpm for 1 minute. Subsequently, NCA811 was added, and secondary kneading was performed at 2000 rpm for 2 minutes. Further, the binder solution and NMP were added such that the solid content concentration was 71.0 wt.%, and tertiary kneading was performed at 2000 rpm for 3 minutes to produce the electrode mixture 1. In the electrode mixture 1, the weight ratio of the electrode active material, carbon black, and the VDF/APS copolymer (electrode active material : carbon black : VDF/APS copolymer) was 100 : 1.5 : 1.5.

### 2-2. Preparation of Electrode Mixture 2

An electrode mixture 2 was prepared in the same manner as in the preparation of the electrode mixture 1 except that pentanedione dioxime was changed to dimethylglyoxime, and the amount of dimethylglyoxime in the binder solution was 0.22 mmol with respect to 1 g of the vinylidene fluoride polymer. The amount of the hydroxyimino group contained in dimethylglyoxime with respect to 1 g of the vinylidene fluoride polymer in the electrode mixture 2 was 0.44 mmol.

### 2-3. Preparation of Electrode Mixture 3

An electrode mixture 3 was prepared in the same manner as in the preparation of the electrode mixture 1 except that pentanedione dioxime was changed to dimethylglyoxime, and the amount of dimethylglyoxime in the binder solution was 0.055 mmol with respect to 1 g of the vinylidene fluoride polymer. The amount of the hydroxyimino group contained in dimethylglyoxime with respect to 1 g of the vinylidene fluoride polymer in the electrode mixture 3 was 0.11 mmol.

### 2-4. Preparation of Electrode Mixture 4

An electrode mixture 4 was prepared in the same manner as in the preparation of the electrode mixture 1 except that pentanedione dioxime was changed to 2-butanone oxime, and the amount of 2-butanone oxime in the binder solution was 0.44 mmol with respect to 1 g of the vinylidene fluoride polymer. The amount of the hydroxyimino group contained in 2-butanone oxime with respect to 1 g of the vinylidene fluoride polymer in the electrode mixture 4 was 0.44 mmol.

### 2-5. Preparation of Electrode Mixture 5

An electrode mixture 5 was prepared in the same manner as in the preparation of the electrode mixture 1 except that pentanedione dioxime was changed to 2-butanone oxime, and the amount of 2-butanone oxime in the binder solution was 0.11 mmol with respect to 1 g of the vinylidene fluoride polymer. The amount of the hydroxyimino group contained in 2-butanone oxime with respect to 1 g of the vinylidene fluoride polymer in the electrode mixture 5 was 0.11 mmol.

### 2-6. Preparation of Electrode Mixture 6

An electrode mixture 6 was prepared in the same manner as in the preparation of the electrode mixture 1 except that pentanedione dioxime was changed to 2-butanone oxime, and the amount of 2-butanone oxime in the binder solution was 0.02 mmol with respect to 1 g of the vinylidene fluoride polymer. The amount of the hydroxyimino group contained in 2-butanone oxime with respect to 1 g of the vinylidene fluoride polymer in the electrode mixture 6 was 0.02 mmol.

### 2-7. Preparation of Electrode Mixture 7

An electrode mixture 7 was prepared in the same manner as in the preparation of the electrode mixture 1 except that pentanedione dioxime was changed to acetaldehyde oxime, and the amount of acetaldehyde oxime in the binder solution was 0.44 mmol with respect to 1 g of the vinylidene fluoride polymer. The amount of the hydroxyimino group contained in acetaldehyde oxime with respect to 1 g of the vinylidene fluoride polymer in the electrode mixture 7 was 0.44 mmol.

### 2-8. Preparation of Electrode Mixture 8

An electrode mixture 8 was prepared in the same manner as in the preparation of the electrode mixture 1 except that pentanedione dioxime was changed to cyclohexanone oxime, and the amount of cyclohexanone oxime in the binder solution was 0.44 mmol with respect to 1 g of the vinylidene fluoride polymer. The amount of the hydroxyimino group contained in cyclohexanone oxime with respect to 1 g of the vinylidene fluoride polymer in the electrode mixture 8 was 0.44 mmol.

### 2-9. Preparation of Electrode Mixture 9

An electrode mixture 9 was prepared in the same manner as in the preparation of the electrode mixture 1 except that the VDF/APS copolymer was changed to a VDF/AA copolymer, the pentanedione dioxime was changed to dimethylglyoxime, and the amount of dimethylglyoxime in the binder solution was 0.22 mmol with respect to 1 g of the vinylidene fluoride polymer. The amount of the hydroxyimino group contained in dimethylglyoxime with respect to 1 g of the vinylidene fluoride polymer in the electrode mixture 9 was 0.44 mmol.

### 2-10. Preparation of Electrode Mixture 10

An electrode mixture 10 was prepared in the same manner as in the preparation of the electrode mixture 1 except that pentanedione dioxime was not added to the binder solution.

### 2-11. Preparation of Electrode Mixture 11

An electrode mixture 11 was prepared in the same manner as in the preparation of electrode mixture 1 except that the carbon black was changed to DENKA BLACK Li-400 available from Denka Company Limited, average primary particle size: 48 nm), the pentanedione dioxime was changed to 2-butanone oxime, the amount of 2-butanone oxime in the binder solution was 0.44 mmol with respect to 1 g of the vinylidene fluoride polymer, and the solid content concentration of the electrode mixture was 75%. The amount of the hydroxyimino group contained in 2-butanone oxime with respect to 1 g of the vinylidene fluoride polymer in the electrode mixture 11 was 0.44 mmol.

### 2-12. Preparation of Electrode Mixture 12

An electrode mixture 12 was prepared in the same manner as in the preparation of electrode mixture 1 except that the carbon black was changed to DENKA BLACK Li-400 available from Denka Company Limited, average primary particle size: 48 nm), the pentanedione dioxime was changed to 2-butanone oxime, the amount of 2-butanone oxime in the binder solution was 0.11 mmol with respect to 1 g of the vinylidene fluoride polymer, and the solid content concentration of the electrode mixture was 75%. The amount of the hydroxyimino group contained in 2-butanone oxime with respect to 1 g of the vinylidene fluoride polymer in the electrode mixture 12 was 0.11 mmol.

### 2-13. Preparation of Electrode Mixture 13

An electrode mixture 13 was prepared in the same manner as in the preparation of electrode mixture 1 except that the carbon black was changed to DENKA BLACK Li-400 available from Denka Company Limited, average primary particle size: 48 nm), the pentanedione dioxime was changed to 2-butanone oxime, the amount of 2-butanone oxime in the binder solution was 0.02 mmol with respect to 1 g of the vinylidene fluoride polymer, and the solid content concentration of the electrode mixture was 75%. The amount of the hydroxyimino group contained in 2-butanone oxime with respect to 1 g of the vinylidene fluoride polymer in the electrode mixture 13 was 0.02 mmol.

### 2-14. Preparation of Electrode Mixture 14

An electrode mixture 14 was prepared in the same manner as in the preparation of the electrode mixture 1 except that the carbon black was changed to DENKA BLACK Li-400 available from Denka Company Limited, average primary particle size: 48 nm), the pentanedione dioxime was changed to dimethylglyoxime, the amount of dimethylglyoxime in the binder solution was 0.22 mmol with respect to 1 g of the vinylidene fluoride polymer, and the solid content concentration of the electrode mixture was 75%. The amount of the hydroxyimino group contained in dimethylglyoxime with respect to 1 g of the vinylidene fluoride polymer in the electrode mixture 14 was 0.44 mmol.

### 2-15. Preparation of Electrode Mixture 15

An electrode mixture 15 was prepared in the same manner as in the preparation of the electrode mixture 1 except that the carbon black was changed to DENKA BLACK Li-400 available from Denka Company Limited, average primary particle size: 48 nm), the pentanedione dioxime was changed to dimethylglyoxime, the amount of dimethylglyoxime in the binder solution was 0.055 mmol with respect to 1 g of the vinylidene fluoride polymer, and the solid content concentration of the electrode mixture was 75%. The amount of the hydroxyimino group contained in dimethylglyoxime with respect to 1 g of the vinylidene fluoride polymer in the electrode mixture 15 was 0.11 mmol.

### 2-16. Preparation of Electrode Mixture 16

An electrode mixture 16 was prepared in the same manner as in the preparation of the electrode mixture 1 except that the carbon black was changed to DENKA BLACK Li-400 available from Denka Company Limited, average primary particle size: 48 nm), the pentanedione dioxime was changed to dimethylglyoxime, the amount of dimethylglyoxime in the binder solution was 0.01 mmol with respect to 1 g of the vinylidene fluoride polymer, and the solid content concentration of the electrode mixture was 75%. The amount of the hydroxyimino group contained in dimethylglyoxime with respect to 1 g of the vinylidene fluoride polymer in the electrode mixture 16 was 0.02 mmol.

### 2-17. Preparation of Electrode Mixture 17

An electrode mixture 17 was prepared in the same manner as in the preparation of electrode mixture 1 except that the carbon black was changed to DENKA BLACK Li-400 available from Denka Company Limited, average primary particle size: 48 nm), the pentanedione dioxime was changed to diacetoxy monoxime, the amount of diacetoxy monoxime in the binder solution was 0.44 mmol with respect to 1 g of the vinylidene fluoride polymer, and the solid content concentration of the electrode mixture was 75%. The amount of the hydroxyimino group contained in diacetoxy monoxime with respect to 1 g of the vinylidene fluoride polymer in the electrode mixture 17 was 0.44 mmol.

### 2-18. Preparation of Electrode Mixture 18

An electrode mixture 18 was prepared in the same manner as in the preparation of electrode mixture 1 except that the carbon black was changed to DENKA BLACK Li-400 available from Denka Company Limited, average primary particle size: 48 nm), the pentanedione dioxime was changed to diacetoxy monoxime, the amount of diacetoxy monoxime in the binder solution was 0.11 mmol with respect to 1 g of the vinylidene fluoride polymer, and the solid content concentration of the electrode mixture was 75%. The amount of the hydroxyimino group contained in diacetoxy monoxime with respect to 1 g of the vinylidene fluoride polymer in the electrode mixture 18 was 0.11 mmol.

### 2-19. Preparation of Electrode Mixture 19

An electrode mixture 19 was prepared in the same manner as in the preparation of electrode mixture 1 except that the carbon black was changed to DENKA BLACK Li-400 available from Denka Company Limited, average primary particle size: 48 nm), the pentanedione dioxime was changed to diacetoxy monoxime, the amount of diacetoxy monoxime in the binder solution was 0.02 mmol with respect to 1 g of the vinylidene fluoride polymer, and the solid content concentration of the electrode mixture was 75%. The amount of the hydroxyimino group contained in diacetoxy monoxime with respect to 1 g of the vinylidene fluoride polymer in the electrode mixture 19 was 0.02 mmol.

### 2-20. Preparation of Electrode Mixture 20

An electrode mixture 20 was prepared in the same manner as in the preparation of electrode mixture 1 except that the carbon black was changed to DENKA BLACK Li-400 available from Denka Company Limited, average primary particle size: 48 nm), pentanedione dioxime was not added to the binder solution, and the solid content concentration of the electrode mixture was 75%.

### 3. Measurement

### 3-1. pH of Electrode Active Material

The pH of the electrode active material (NCA811) was the pH of water after the electrode active material was extracted with water at normal temperature (25°C). The extraction of the electrode active material into water was performed by an extraction method provided in JIS K 5101-16-2 (2004). Specifically, the electrode active material was added in ultrapure water in an amount of 50 times the weight of the electrode active material, the mixture was stirred with a magnetic stirrer at a rotational speed of 600 rpm for 10 minutes, and the pH of the solution was measured using a pH meter MODEL: F-21 available from HORIBA, Ltd. The pH after extraction when the NCA 811 was extracted with water was 11.5.

### 3-2. Inherent Viscosity (ηi) of Vinylidene Fluoride Polymer

A polymer solution was prepared by dissolving 80 mg of a vinylidene fluoride polymer in 20 mL of N,N-dimethylformamide. The viscosity η of the prepared polymer solution was measured using an Ubbelohde viscometer in a constant temperature bath at 30°C. The inherent viscosity (ηi) was then calculated from the following formula: $ηi = \left(1/C\right) ln \left(η/η0\right)$ where η0 is the viscosity of the solvent N,N-dimethylformamide, and C is the concentration of the vinylidene fluoride polymer in the prepared polymer solution (0.4 g/dL).

The inherent viscosity of the VDF/APS copolymer was 2.5 dL/g, and the inherent viscosity of the VDF/AA copolymer was 2.5 dL/g.

### 4. Evaluation

### 4-1.Viscosity

Using an E-type viscometer, the viscosity was measured at 25°C and a shear rate of 2 s⁻¹. Specifically, after the slurry (electrode mixture) was placed in the measurement device, the measurement device was on standby for 60 seconds, and then the rotor was rotated to measure the viscosity. At this time, the value after 300 seconds from the start of rotation of the rotor was taken as the slurry viscosity. For each prepared electrode mixture, the viscosity immediately after preparation and the viscosity after storage for 7 days (168 hours) at 40°C under a nitrogen atmosphere were measured.

### 4-2. Peel Strength

Each of the prepared electrode mixtures was applied to an aluminum foil having a thickness of 15 µm as a current collector with a bar coater, and primarily drying was performed at 110°C for 30 minutes in a thermostatic chamber under a nitrogen atmosphere. Then, secondary drying was performed at 130°C for 2 hours under a nitrogen atmosphere to produce an electrode (electrode peeling measurement sample) having an areal weight of about 250 g/m².

The prepared electrode was cut into a length of 100 mm and a width of 20 mm. Then, a 90° peel test for the electrode mixture layer was conducted at a head speed of 10 mm/min in accordance with JIS F6854-1 using a tensile tester (ORIENTE CHSIA-1150 available from UNIVERSAL TESTING MACHINE) to measure the peel strength.

The rate of change (%) of the peel strength of the electrode mixture layer in the electrode prepared from each electrode mixture containing an oxime was calculated with respect to the peel strength of the electrode mixture layer in an electrode prepared from an electrode mixture containing the same vinylidene fluoride polymer, the same electrode active material, and the same carbon black but containing no oxime (when a VDF/APS copolymer was used as the vinylidene fluoride polymer, either the electrode mixture 10 or the electrode mixture 20. When a VDF/AA copolymer was used as the vinylidene fluoride polymer, an electrode mixture separately prepared by using the VDF/AA copolymer). From the obtained rate of change, the peel strength was evaluated according to the criteria shown below.
⊚ Peel strength is improved (rate of change is 100% or more)
o Peel strength is almost the same (rate of change is 80% or more and less than 100%)
× Peel strength is reduced (rate of change is less than 80%)

Tables 1 and 2 show the types of electrode active materials used for preparation of the electrode mixtures 1 to 20, the average primary particle size of carbon black, the amount (weight ratio) of the comonomer of the vinylidene fluoride polymer (PVDF), the type and addition amount of the oxime, and evaluation results. The addition amount of the oxime represents the amount of hydroxyimino groups with respect to 1 g of PVDF.

**[Table 1]**

| Electrode mixture No. | Carbon black | PVDF | Oxime | | Evaluation | | | | Notes |
|---|---|---|---|---|---|---|---|---|---|
| | Particle size (nm) | Weight ratio | Type | Added amount (mmol) | Viscosity (mPa s) | | Peel strenath | | |
| | | | | | Immediately after preparation | After storage for 7 days | Rate of change (%) | Evaluation | |
| 1 | 23 | VDF/APS =99/1 | Pentanedione dioxime | 0.44 | 7510 | 13730 | 168 | ⊚ | Examples |
| 2 | 23 | VDF/APS =99/1 | Dimethylglyoxime | 0.44 | 9520 | 14870 | 129 | ⊚ | Examples |
| 3 | 23 | VDF/APS =99/1 | Dimethylglyoxime | 0.11 | 10390 | 37450 | 105 | ⊚ | Examples |
| 4 | 23 | VDF/APS =99/1 | 2-butanone oxime | 0.44 | 13560 | 13540 | 92 | ○ | Examples |
| 5 | 23 | VDF/APS =99/1 | 2-butanone oxime | 0.11 | 12370 | 14370 | 86 | ○ | Examples |
| 6 | 23 | VDF/APS =99/1 | 2-butanone oxime | 0.02 | 12250 | 25780 | 90 | ○ | Examples |
| 7 | 23 | VDF/APS =99/1 | Acetaldehyde oxime | 0.44 | 11150 | 13190 | 112 | ⊚ | Examples |
| 8 | 23 | VDF/APS =99/1 | Cyclohexanone oxime | 0.44 | 7870 | 7480 | 94 | ○ | Examples |
| 9 | 23 | VDF/AA =100/1 | Dimethylglyoxime | 0.44 | 14100 | 10680 | 96 | ○ | Examples |

**[Table 2]**

| Electrode mixture No. | Carbon black | PVDF | Oxime | | Evaluation | | | | Notes |
|---|---|---|---|---|---|---|---|---|---|
| | Particle size (nm) | Weight ratio | Type | Added amount | Viscosity (mPa s) | | Peel strenath | | |
| | | | | | Immediately after preparation | After storage for 7 days | Rate of change (%) | Evaluation | |
| 10 | 23 | VDF/APS =99/1 | - | - | 16410 | >50000 | 100 | - | Comparative Examples |
| 11 | 48 | VDF/APS =99/1 | 2-butanone oxime | 0.44 | 4760 | 8710 | 58 | × | Comparative Examples |
| 12 | 48 | VDF/APS =99/1 | 2-butanone oxime | 0.11 | 4470 | 9640 | 71 | × | Comparative Examples |
| 13 | 48 | VDF/APS =99/1 | 2-butanone oxime | 0.02 | 4570 | >50000 | 88 | ○ | Comparative Examples |
| 14 | 48 | VDF/APS =99/1 | Dimethylglyoxime | 0.44 | 3020 | 7220 | 61 | × | Comparative Examples |
| 15 | 48 | VDF/APS =99/1 | Dimethylglyoxime | 0.11 | 3920 | >50000 | 73 | × | Comparative Examples |
| 16 | 48 | VDF/APS =99/1 | Dimethylglyoxime | 0.02 | 4230 | >50000 | 83 | ○ | Comparative Examples |
| 17 | 48 | VDF/APS =99/1 | Diacetoxy monoxime | 0.44 | 4030 | 8090 | 39 | × | Comparative Examples |
| 18 | 48 | VDF/APS =99/1 | Diacetoxy monoxime | 0.11 | 3200 | 17880 | 49 | × | Comparative Examples |
| 19 | 48 | VDF/APS =99/1 | Diacetoxy monoxime | 0.02 | 2430 | >50000 | 58 | × | Comparative Examples |
| 20 | 48 | VDF/APS =99/1 | - | - | 3570 | >50000 | 100 | - | Comparative Examples |

As is apparent from Tables 1 and 2, the electrode mixture containing an oxime, a vinylidene fluoride polymer having a structural unit derived from vinylidene fluoride in an amount of 50 mol% or more, an electrode active material, and carbon black having an average primary particle size of 30 nm or less was less likely to be thickened, and the adhesion strength of the electrode mixture layer to the current collector was also less likely to decrease.

This application claims priority to Japanese Patent Application No. 2023-182455 filed on October 24, 2023. The matters described in the originally filed specification and claims of the application are incorporated herein by reference.

### INDUSTRIAL APPLICABILITY

The electrode mixture according to the present invention is less likely to be thickened, and can more effectively suppress the decrease in the adhesion strength of the electrode mixture layer to the current collector, or can prepare an electrode mixture layer having a higher adhesion strength.

## Claims

1. An electrode mixture comprising:
an oxime;
a vinylidene fluoride polymer having a structural unit derived from vinylidene fluoride in an amount of 50 mol% or more;
an electrode active material; and
carbon black having an average primary particle size of 30 nm or less.

2. The electrode mixture according to claim 1, wherein the oxime is an oxime represented by Formula (1) shown below or an oxime represented by Formula (2) shown below: 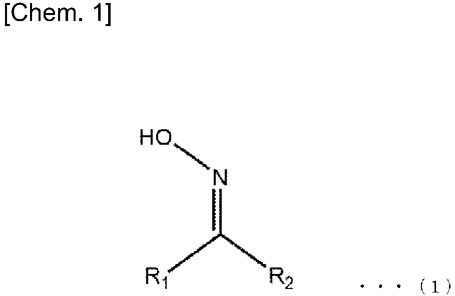 where
R₁ and R₂ independently represent a functional group selected from the group consisting of a hydrogen atom, an aldehyde group, a nitrile group, an alkyl group having 1 or more and 10 or less carbon atoms, an alkenyl group having 2 or more and 10 or less carbon atoms, an alkynyl group having 2 or more and 10 or less carbon atoms, a cycloalkyl group having 3 or more and 10 or less carbon atoms, a cycloalkenyl group having 3 or more and 10 or less carbon atoms, an aryl group having 6 or more and 18 or less carbon atoms, an aralkyl group having 7 or more and 14 or less carbon atoms, and a heterocyclic group having 3 or more and 13 or less carbon atoms,
some or all of hydrogen atoms of R₁ and R₂ may be substituted with a substituent selected from the group consisting of an alkyl group having 1 or more and 10 or less carbon atoms, an aryl group having 6 or more and 18 or less carbon atoms, a hydroxy group, and an amino group,
when the functional group or the substituent has the alkyl group, the alkyl group may be straight-chain, branched, or may have an ester bond, and
R₁ and R₂ may be bound to each other to form a ring; 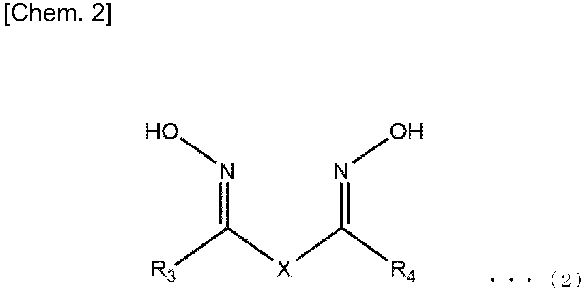
where
R₃ and R₄ independently represent a functional group selected from the group consisting of a hydrogen atom, an aldehyde group, a nitrile group, an alkyl group having 1 or more and 10 or less carbon atoms, an alkenyl group having 2 or more and 10 or less carbon atoms, an alkynyl group having 2 or more and 10 or less carbon atoms, a cycloalkyl group having 3 or more and 10 or less carbon atoms, a cycloalkenyl group having 3 or more and 10 or less carbon atoms, an aryl group having 6 or more and 18 or less carbon atoms, an aralkyl group having 7 or more and 14 or less carbon atoms, and a heterocyclic group having 3 or more and 13 or less carbon atoms,
some or all of hydrogen atoms of R₃ and R₄ as functional groups may be substituted with a substituent selected from the group consisting of an alkyl group having 1 or more and 10 or less carbon atoms, an aryl group having 6 or more and 18 or less carbon atoms, a hydroxy group, and an amino group,
when the functional group or the substituent has the alkyl group, the alkyl group may be straight-chain, branched, or may have an ester bond,
R₃ and R₄ may be bound to each other to form a ring,
X represents a single bond or an alkylene group having 1 or more and 5 or less carbon atoms, and
the alkylene group may be straight-chain or branched.

3. The electrode mixture according to claim 2, wherein
the oxime represented by Formula (1) is an oxime in which R₁ and R₂ independently represent a hydrogen atom or an alkyl group having 1 or more and 5 or less carbon atoms, the alkyl group may be straight-chain or branched, and R₁ and R₂ may be bound to each other to form a ring, and
the oxime represented by Formula (2) is an oxime in which R₃ and R₄ independently represent a hydrogen atom or an alkyl group having 1 or more and 5 or less carbon atoms, the alkyl group may be straight-chain or branched, R₃ and R₄ may be bonded to each other to form a ring, X represents a single bond or an alkylene group having 1 or more and 5 or less carbon atoms, and the alkylene group may be straight-chain or branched.

4. The electrode mixture according to claim 2, wherein the oxime is the oxime represented by Formula (2).

5. The electrode mixture according to claim 1, wherein a content of the oxime is an amount such that an amount of hydroxyimino groups of the oxime with respect to 1 g of the vinylidene fluoride polymer is 0.02 mmol/g or more and 0.80 mmol/g or less.

6. The electrode mixture according to claim 1, wherein the vinylidene fluoride polymer is a homopolymer of vinylidene fluoride.

7. The electrode mixture according to claim 1, wherein the vinylidene fluoride polymer is a copolymer of a monomer copolymerizable with vinylidene fluoride and vinylidene fluoride.

8. The electrode mixture according to claim 1, wherein the vinylidene fluoride polymer is a vinylidene fluoride polymer containing a structural unit derived from a compound represented by Formula (3) shown below: 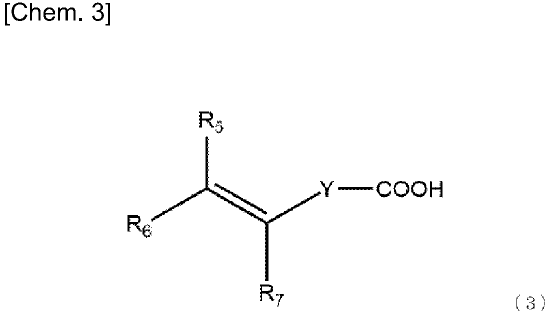 where
R₅ represents a hydrogen atom, an alkyl group having 1 or more and 5 or less carbon atoms, or a carboxy group substituted with an alkyl group having 1 or more and 5 or less carbon atoms,
R₆ and R₇ independently represent a hydrogen atom or an alkyl group having 1 or more and 5 or less carbon atoms,
when R₅, R₆, or R₇ represents the alkyl group, the alkyl group may be straight-chain or branched, and
Y represents a single bond or an atomic group having a main chain with the number of atoms of 1 or more and 20 or less and a molecular weight of 500 or less.

9. The electrode mixture according to claim 1, wherein the vinylidene fluoride polymer is a vinylidene fluoride polymer containing a structural unit derived from a (meth)acrylate-based monomer having no COOH group at a terminal.

10. The electrode mixture according to claim 1, wherein the electrode active material is a lithium metal oxide represented by Formula (4) shown below, and is a compound having a pH of extracted water of 10.5 or more when extracted with water at 25°C by an extraction method provided in JIS K 5101-16-2 (2004):
LiNiₓCo_{y}M_{z}O₂ ... (4)
where M is Mn or Al, and 0 < x < 1, 0 < y < 1, 0 < z < 1, and x + y + z = 1 are satisfied.

11. An active material mixture comprising:
an oxime;
an electrode active material; and
carbon black having an average primary particle size of 30 nm or less.

12. A binder solution for an electrode mixture, the binder solution comprising:
an oxime; and
a vinylidene fluoride polymer having a structural unit derived from vinylidene fluoride in an amount of 50 mol% or more,
wherein the electrode mixture further contains an electrode active material and carbon black having an average primary particle size of 30 nm or less.

13. A method for producing an electrode mixture,
the method comprising mixing an oxime, a vinylidene fluoride polymer having a structural unit derived from vinylidene fluoride in an amount of 50 mol% or more, an electrode active material, and carbon black having an average primary particle size of 30 nm or less to form a slurry.

14. A method for producing an electrode, the method comprising:
applying, to a current collector, the electrode mixture described in any one of claims 1 to 10; and
drying the applied electrode mixture.

15. An electrode produced by the method for producing an electrode described in claim 14.

16. The electrode according to claim 15, wherein, when measured by a 90° peel test, an electrode mixture layer produced from the electrode mixture has a peel strength from the current collector of 80% or more with respect to a peel strength of an electrode mixture layer from a current collector for an electrode produced under same production conditions from an electrode mixture having same compositions except that no oxime is contained.

17. An electrode comprising:
a current collector; and
an electrode mixture layer,
wherein
the electrode mixture layer contains
an oxime,
a vinylidene fluoride polymer having a structural unit derived from vinylidene fluoride in an amount of 50 mol% or more,
an electrode active material, and
carbon black having an average primary particle size of 30 nm or less.

18. A secondary battery comprising the electrode described in claim 17.
